# EUROPEAN PATENT SPECIFICATION

(11) **EP 4 244 032 B1**
(45) Date of publication and mention of the grant of the patent: **30.07.2025**
(21) Application number: 21806420.2
(22) Date of filing: 10.11.2021
(51) Int. Cl.: B29B 17/02, B07C 5/342, B29B 17/04

(54) **METHOD OF SEPARATING PLASTICS**
VERFAHREN ZUM SEPARIEREN VON KUNSTSTOFFEN
MÉTHODE POUR SÉPARER DES PLASTIQUES

(30) Priority: 11.11.2020 NL 2026870
(43) Date of publication of application: 20.09.2023
(73) Proprietor: Enigma Sinapi B.V., 6716 AE Ede (NL)
(72) Inventor: TEERLING, Bouwe, 6716 AE Ede (NL); VAN WIJK, Eduard Pieter Andries, 6716 AE Ede (NL)
(74) Representative: Patent Business B.V.
(86) International application number: PCT/NL2021/050689
(87) International publication number: WO 2022/103258

(56) References cited:
- EP-A1- 0 497 397
- WO-A1-2017/220079
- CN-A- 107 703 094
- DE-A1- 102014 004 529
- SUN MENGMENG ET AL: "Delayed luminescence: an experimental protocol for Chinese herbal medicines : Delayed luminescence", LUMINESCENCE: THE JOURNAL OF BIOLOGICAL AND CHEMICAL LUMINESCENCE, vol. 31, no. 6, 1 September 2016 (2016-09-01), GB, pages 1220 - 1228, XP055827774, ISSN: 1522-7235, DOI: 10.1002/bio.3094
- VINZELBERG G ET AL: "ERKENNUNG DUNKLER KUNSTSTOFFE MIT LASERINDUZIERTER FLUORESZENZ//IDENTIFICATION OF DARK-COLOURED PLASTICS WITH LASER-INDUCED FLUORESCENCE", AT MINERAL PROCESSING, BAUVERL. BV, DE, vol. 48, no. 3, 1 January 2007 (2007-01-01), pages 16 - 23, XP001505030, ISSN: 1434-9302
- NORDBRYHN ANDREAS: "The Optics of Recycling", vol. 23, no. 6, 1 June 2012 (2012-06-01), US, pages 18 - 23, XP055827426, ISSN: 1047-6938, Retrieved from the Internet <URL:https://www.osa-opn.org/opn/media/Images/PDF/2012/0612/18-23-Nordbryhn-wout_CSS.pdf?ext=.pdf> [retrieved on 20210726], DOI: 10.1364/OPN.23.6.000018
- HEINZ LANGHALS ET AL: "Improved High Performance Recycling of Polymers by Means of Bi-Exponential Analysis of Their Fluorescence Lifetimes", GREEN AND SUSTAINABLE CHEMISTRY : GSC, vol. 05, no. 02, 1 January 2015 (2015-01-01), US, pages 92 - 100, XP055422593, ISSN: 2160-6951, DOI: 10.4236/gsc.2015.52012
- J W VERHOEVEN: "Glossary of terms used in photochemistry (IUPAC Recommendations 1996)", PURE & APPLIED. CHEM., vol. 68, no. 12, 1 January 1996 (1996-01-01), pages 2223 - 2286, XP055605453, DOI: 10.1351/pac199668122223

## Description

### FIELD OF THE INVENTION

The present invention is in the field of a method of separating various types of polymers as well as colour separating said polymers. The method can also be used for separating various types of metal, for separating various types of textile, for separating various types of brick, or for separating various types of stone.

### BACKGROUND OF THE INVENTION

The present invention is in the field of a method for separating various types of polymers as well as colour separating said polymers. Nowadays huge amounts of plastic are produced and discarded. Plastics relate to a wide range of materials that are made of synthetic or semi-synthetic organic compounds. Plastics are typically malleable and can be formed into solid objects. The term "plasticity" refers to a property of materials that can deform irreversibly without breaking. Plastics are typically organic polymers of high molecular mass which may contain other substances, such as pigments providing a colour to the plastics. They are usually synthetic derived from petrochemicals as well as renewable materials.

Most plastics are durable and therefore degrade very slowly. Huge amounts of plastic are produced, and therefore also of plastic waste. At least one billion tons of plastic waste have been discarded since the 1950s, bus most likely much more. Much of this material may persist for centuries or longer. Re-use of plastic is therefore considered extremely important.

The European and Dutch Climate Act stipulates that by 2030 CO₂ emissions must be reduced by 49% compared to 1990 levels. One of the solutions to reduce CO₂ emissions is to reduce the use of primary raw materials. In addition to the reuse of products and materials, recycling is in many cases the preferred method. An average of 41% of plastic waste is recycled in Europe, with the Netherlands being one of the frontrunners with 48%. Prior art recycling processes, however, are often still far from optimal. The tricky thing about plastic recycling is that there are hundreds of different types of plastic and each composition requires a different processing process. A lot of plastic is therefore still incinerated in waste incinerators or is lost through collection and sorting processes that do not function adequately. On the collection side of the process, many measures have already been taken in recent years. Residents are being encouraged to separate waste further and further. However, plastic separation in particular often causes pollution because there is waste in this stream that does not really belong there. So, in the process of gathering waste plastic, various types of plastics are typically mixed, and often mixed rather intimately. This also holds for various colours of plastics, of the same or different type. Re-use of plastic therefore typically requires separating out different types of plastic. Currently the highest achievable separation in plastics processing is 90%. This is achieved by applying Near-infrared (NIR) separation technology. With this technology, certain plastic properties are detected by means of infrared. Compressed air is then used to shoot the detected particle out of the material stream. The remaining 10% of the plastic cannot be detected and is disposed of as residual waste, which is then normally incinerated.

Document WO0187567 (B1) for instance recites a method for the dry separation of unsorted garbage that contains packaging waste, said packaging waste including plastics of various polymer groups. The method comprises a number of steps: separating the materials on the basis of differences in size; separating the materials on the basis of differences in grain shape, grain size and/or specific weight; separating the materials on the basis of differences in their magnetic properties; separating the materials on the basis of differences in their electric properties; and separating the materials on the basis of differences in their spectroscopic properties. Every separation step is carried out at least once and the separation of components of the unsorted garbage results in a remaining mass flow that contains non-recyclable remaining garbage and plastic articles. The plastic articles are collectively removed from the mass flow as a mixed plastic fraction and said mixed plastic fraction is selectively separated into substantially polymer-specific fractions using polymer-specific separation methods. It also relates to a device for carrying out the method.

Some further documents may be relied on. For instance, EP 0 497 397 A1 recites a method for qualitative analysis of particles of different types of plastic by means of emission spectral analysis, the irradiation of shortwave light is used to record an emission spectrum, which has optical radiation of a comparatively longer wavelength, in terms of intensities of radiation within a relatively narrow waveband, and is used to identify the plastics particles. In order to identify rapidly and sort particles of different types of plastic which occur in large quantities, the individual plastic particles are subjected to a light pulse, a characteristic is formed from the intensities of radiation of the discrete wavelengths or wavebands using an algorithm, and a sorting signal is obtained by comparing this characteristic with prescribed limiting values. Sun Mengmeng et al, in "Delayed luminescence: an experimental protocol for Chines herbal medicines: Delayed luminescence", Luminescence, J. Biological & Chem. Luminescence, Vol. 31, No. 6, p. 1220-1228, 2016, establish a protocol for direct and rapid DL measurements of dried Chinese herbal materials, including the determination of the dependence on: (a) the optimal excitation time utilizing a white light source; (b) the optimal size of the grinded herbal particle; and (c) the humidity conditions before and during measurement. Results indicate that stable and reproducible curves of DL photon emission depend mainly on the water content of herbal materials. As background art Vinzelberg et al, in AT mineral Processing, Bauverl. BV, DE, Vol. 48, No. 3, p. 16-23 (2007), CN 107 703 094 A, WO 2017/220079 A1, DE 10 2014 004 529 A1, Nordbryhn, Optics and Photonics News., Vol. 23, No. 6, p. 18-23 (2012), Langhals et al., in Green and Sustainable Chemistry, GSC, Vol. 5, No. 2, p. 92-100 (2015), and Verhoeven, in Pure & Applied Chem., Vol. 68, No. 12, p. 2223-2286 (1996) may be considered.

Such methods typically involve a number of separation steps, which makes the process expensive and time consuming. In addition typically part of the work is still done manually. In addition methods may produce toxic compounds and dust.

The present invention therefore relates to an improved method, which solves one or more of the above problems and drawbacks of the prior art, providing reliable results, without jeopardizing functionality and advantages.

### SUMMARY OF THE INVENTION

It is an object of the invention to overcome one or more limitations of the devices of the prior art and to improve these. The object is achieved by the subject-matter of claims 1 and 15. Advantageous further developments are subject-matter of the dependent claims.

In a first aspect the present invention relates to a method of separating various types of polymers, comprising providing an amount of mixed polymer material, reducing a size of the polymer material, colour separating the polymer material therewith forming colour sorted fractions, each colour separated fraction comprising a plurality of polymer elements, feeding a colour sorted fraction to an enclosed space, preferably a space which limits entry of radiation in a wavelength range of 180-3000 nm to less than 10⁻³ W/m², preferably to less than 10⁻⁵ W/m², identifying a delayed luminescence response of at least one individual polymer element, typically most or all of the indicudal polymer elements, and sorting polymer elements per type of polymer.

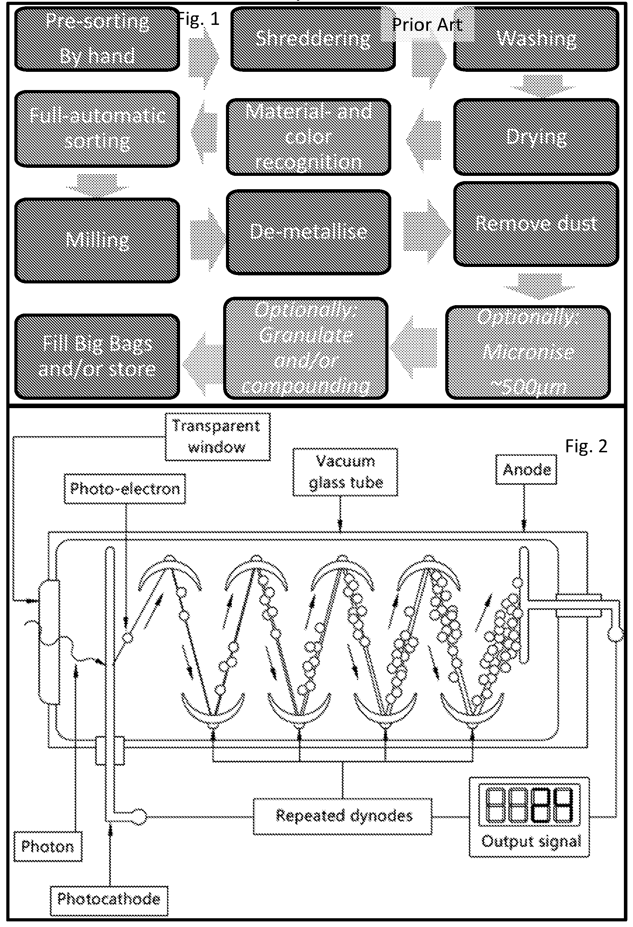

Fig.1 shows an example of a typical process for recycling of plastics. Therein typically individual parts of various sorts of plastics and various colour are separated from one and another, based on said colour and said type. These individual parts typically have a different size and shape. Typically these individual parts are place on at least one moving belt or the like, identified in terms of colour and type, and separated. The belt may be sub-divided into compartments. The compartment may have a dimension of 30x30cm². A modular system is typically used. The length of a belt may be modular and may depend on the number of plastics and colours to be separated. Ejection of a plastic item is provided at the right point on a conveyor belt, such as via 'air nozzles' in a side rail. The side rail may be open on both sides. Individual parts typically have a size of less than 20*20 cm², in view of belt operation, and a size larger than 1*1 mm², in view of processing and detection. At least one feeder places polymer elements on the at least one conveyor belt, typically at a pre-determined speed. The feeder is typically provided with polymer material from a storage, such as a bunker. Typically polymer elements are identified on one or more moving belts, or the like, using the present method, and thus separated. The present invention relates to a unique system combining a number of sensors, in particular a colour sensor, a delayed luminescence sensor, preferably using a photomultiplier, and optionally an infrared sensor, and/or a Raman spectrometer. A suitable DL detector housing is a FACT50 and LCT50 and a suitable photomultiplier is 9558B series of ET Enterprises. Likewise an Hamamatsu C133366-3050GD may be used. Sensors are typically placed in a housing or the like, typically an enclosed housing, allowing limited or no entry of ambient light. More than one sensor may be placed in one housing, as well as separate housing may be used. The colour may be measured with an industrial spectrometer. All colours can be measured including black, as well as transparent polymers. The plastic can be measured absolutely (actual colour) and optionally classified into a "colour group" (e.g. green shades). Fig. 2 shows a schematic example of material analysis using delayed luminescence. An exact determination of plastic type via a Photomultiplier Tube and UV exposure is obtained. All homogeneous, as well as mixed plastics (e.g. PVC with chalk) can be measured. The method is colour independent, i.e. is applicable to any colour, is insensitive to aging of polymer material and to deformation of polymer material. Typically a database with basic information for various types and colours of plastics is sued. Further a self-learning algorithm for optimizing plastic recognition is used. Therewith the present system provides a high accuracy and reliable separation of up to 99% of polymer elements. At least fifteen different polymer types can be detected with one detector. Further on in the process, a polymer element is automatically sorted in view of the plastic type and colour. The present method and apparatus provide reduced costs, both in terms of labour and energy consumption, a reduced chance of errors, a purer end product, a further reduction of the size of the waste stream remaining after the present method, an increase in capacity/volume throughput per unit, of up to 50% increase, and improved quality of end products.

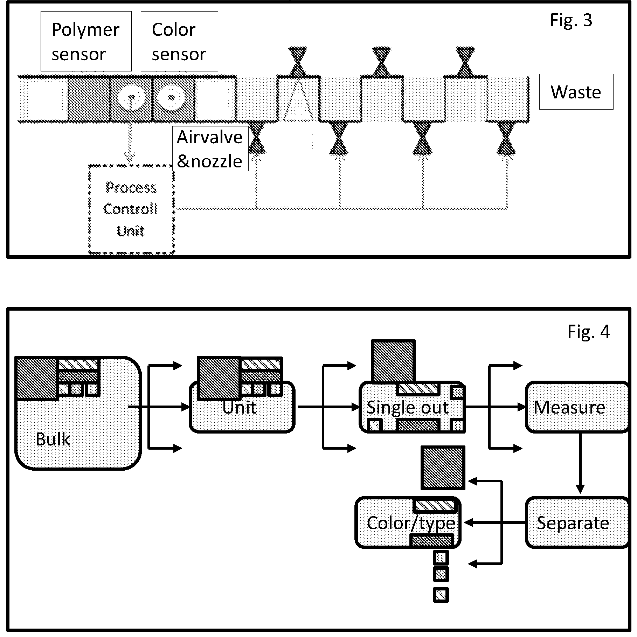

The present method and apparatus detect incoming plastic waste using photonic sensors. The output of the method is accurately sorted plastic fractions. The output is then suitable for recycling, such as companies that can process it, thus creating a suitable raw material for a high-quality application, and in many cases fully replacing use of new materials. A Smart Multi-sensor technology is provided. A predictive algorithm, typically in combination with about 8 parameters, is used to achieve a high degree of accuracy. The characteristics provided by delayed luminescence serves as an important new parameter in determining the polymer type. This technique is incorporated in an apparatus for waste separation. In summary, the following results are obtained, namely a successful Smart Multi-sensor technology that can separate plastics with an accuracy of ~99% in less than 1 sec, a successful Smart Multi-sensor technology that can recognise and separate at least fifteen types of plastics, and a successful development and integration of Smart Multi-sensor technology, hardware and software operating system. Fig. 3 shows a schematic representation of the present process. Therein a sensor is used to identify the nature of a plastic object and a sensor is used to identify a colour of a plastic object. A process control unit controls various air-valves which blow, if required, a plastic object from the belt. A typical apparatus has sufficient speed to feed e.g. 10 measuring belts (one sorting line consists of 10 measuring units) from a storage, wherein the pieces are distributed evenly in space and time, preferably using a vibrating chute with a specific shape (a kind of V-shape) in order to be able to adequately vibrate the different pieces of plastic. Basically, the apparatus is based on a system of conveyors for the supply, a vibrating chute for loosening the bulk and a system of distribution belts for the correct way of supply to the measuring system. The present apparatus may have a narrow conveyor belt (friction belt) for the first phase of the feeder (the dosed feed). Subsequently, the fraction may fall onto a wider dosing belt (which may also have to vibrate to divide and/or separate pieces). This dosing belt sprinkles the waste into the vibrating chute to align the parts one after the other. Finally, piece by piece, the plastic falls onto a dividing band that must ensure sufficient distance (time) between the successive pieces. By means of sensors, this process can be adequately monitored and regulated (e.g. in terms of speed). After supply of the material the step of actual measurement follows. Use is made of the Smart Multi Sensor, which works based on photon technology. The application of photons for detection purposes in this industry is unique. The materials are to be illuminated from an external source (typically in an otherwise completely dark "room"), the materials will "hold" this light for a limited period of time and thus also emit a certain amount of light (the delayed luminescence). See figure 2 for the schematic effect. Each type of polymer has a unique light curve, i.e. a unique appearance of light intensity and duration. If a light source emits light signals to the plastic and sensors then register the radiation of the plastic, the type of polymer can be determined. The added value of this technology is that various types of plastic (which differ in their polymer structure) can eventually be recognised by the sensor within a second and can therefore be separated. This enables processing of a large quantity of plastic per hour. In addition, the colour of the piece of plastic can be determined by using a spectrometer. Therewith all colours can be identified, including black and transparent. With the sensors all commercially relevant types of plastic can be recognised. This initially involves already 15 different types. At a later stage, this can be extended with another 10, less common, types of plastic. During the above measuring and separation process an exact position of the piece of plastic on the belt may be automatically determined, so that it can be removed from the belt when required, such as by means of air currents. It is therewith directed to a correct container. This novel sorting process is completely different from current sorting methods. In view of numbers, it is noted that typically one measuring unit can analyse 3,500 tons of plastic on an annual basis. An average sorting line may use 5-20 such units to achieve the desired capacity. If one sorting line is used 35,000 t/y can be processed. This line then saves 8,095 tonnes more CO₂ annually compared to NIR technology. In addition, a contribution to cleaner air, cleaner soil, and cleaner water is provided.

Figure 4 shows schematics of the present method and apparatus, wherein pieces of polymeric material are singled out into polymer elements, measured, separated, and provided into bins based on colour and type. Schematically various sized pieces of various types of plastic, and in addition of various colours, reside in the bulk, indicated with colours/shading. Various units are provided for plastic separation, of which one is shown. In a unit plastic pieces (also referred to as elements) are singled out, typically in more than one "single-out unit, such as 2-10 single-out units. Plastic elements are then measured, in order to determine colour and nature thereof (e.g. plastic sort, such as PE or PP). Based on the identification plastic elements are separated, such as also indicated in figure 4. A result is various bins, each bin comprising one type of plastic of one colour.

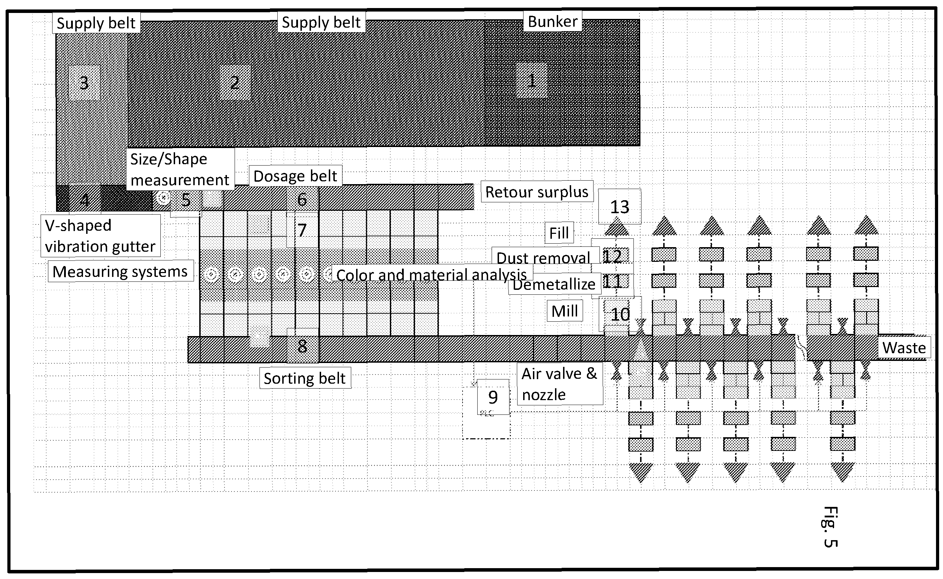

Fig. 5 shows schematics of the present separating method and a system for separating. Material is fed from a bunker 1 over a first supply belt 2 to final supply belt 3. Therefrom plastic elements are fed to a V-shaped vibrating gutter 4. A size and form of each individual plastic element are measured in multiple units 5. A dosage belt 6 is then used to feed typically parallel measurement systems 7. Therefrom identified plastic elements are moved to a sorter belt 8. Colour and size and form of each individual plastic element are fed to PLC 9. Using control air valves and nozzles individual plastic elements are sorted out to respective bins 10, where they may be milled 11, demetallized 12, made free of dust 12, and filled 13.

Using the present technique, approximately 5-10 steps less will be needed compared to a "regular" sorting process (depending on how the process is set up now). Among others the manual pre-sorting, the process of the water and salt line (consisting of several parts), the possible sorting by infrared, and the (multiple) drying are steps are no longer necessary.

In a second aspect the invention relates to a computer program comprising instructions loaded on at least one computer for carrying out the following steps: identifying a delayed luminescence response of an individual polymer element, and based on said response optionally sorting elements of polymer per type of polymer. Further steps, such as detailed in the claims and/or embodiments, may be included, in line with the present method and embodiments thereof.

In a third aspect the present invention relates to an apparatus for separating various types of polymers, comprising at least one feeder for providing unseparated polymers, at least one transporter for moving polymer elements, at least one enclosed space for receiving polymer elements, typically an enclosed space with at least one shutter, such as at least one entrance shutter and/or at least one exit shutter, comprising at least one polymer identifier, and at least one delayed luminescence sensor, optionally comprising a photomultiplier, at least one separator for separating polymer elements, and a computer program according to the invention. The present apparatus typically comprises at least one single out unit. The single out unit is capable of singling out individual polymer elements for a stream of polymer elements. The at least one single out unit is preferably provided before the at least one enclosed space for receiving polymer elements.

Advantages of the present description are detailed throughout the description.

### DETAILED DESCRIPTION OF THE INVENTION

In a first phase, four types of plastic (ABS, PE, PP, PVC) were irradiated with UV light in a laboratory, after which the photonic response was recorded, by one or more sensors, such as 2-5 sensors. It was concluded that various parameters can be used to quickly and efficiently distinguish the different species. Typically some eight parameters are used, relating to various wavelengths λ used for DL, typically a number of wavelengths per type and colour of plastic, and amplitude at respective wavelengths A, relative amplitude of initial DL response at t=0.01 sec, time of reaching an amplitude of half the initial amplitude, time of reaching an amplitude of 10% of the initial amplitude, shape of the DL-response curve, response wavelengths, and so on. The eight parameters were integrated into a predictive algorithm so that the exemplary four plastic species could be accurately recognised. In addition the four polymers were divided into seven colour groups. In summary, this phase yielded the following results, an accurate detection of ABS, PE, PP and PVC which are separated from the waste one by one, the four types of plastic could be distinguished statistically with high significance by the algorithm, and the various parameters related to DL are suitable for distinguishing the four types of plastic. In phase three, the sensor technology was refined in which also colour recognition was applied. In addition, five new plastic types were added to the analysis: PS, PC, HDPE, POM and PMMA. New tests showed that the data was significantly improved, and that the variance was reduced. In addition, the nine plastic types were distinguished using DL parameters and could be divided into several groups and that complete separation between the nine species was possible. Extension to at least 15 sorts of polymers is envisaged.

Inventors have thus selected eight parameters related to the radiation emitted by the plastic particles after irradiation with UV light. Each plastic species has several parameters on which it exhibits unique values. As mentioned above, these values may relate to an initial intensity or amplitude, dependency of intensity from administered light wavelength, speed of decay of luminescence over time, combined delayed luminescence responses, e.g. in view of combined material properties typically being present in polymers, and thus linear combinations of the above. Each polymer is found to have its unique profile, and typically profiles; in addition thereto each colour provides further characteristics to the profile. The inventors have given these parameters an alphanumeric code. The unique profile values are processed in an algorithm linked to the technology, such as a Kalman filter. In this way, a sensor that registers the reflection of an irradiated plastic element during the process can accurately determine which type of plastic is involved. After detection, the obtained measurement result is passed on to the separation mechanism using existing software. This will then remove the plastic chip from the material flow so that it enters the correct sorting compartment via another conveyor belt (see figure 4).

Added value of this technology is that various types of plastic are recognised by the sensor within one second (and expressed in parameters) and can therefore be separated. This enables a sorting company to process a large quantity of plastic per hour. In addition, the colour of the piece of plastic can be determined by using a spectrometer. This allows all colours to be identified, including black and transparent. Firstly, the technology will be able to detect 15 different types of plastic with an accuracy of 99% (the NIR has an accuracy of 90%). Later, this can be expanded with less common types of plastic.

In an exemplary embodiment of the present method the delayed luminescence is performed with at least one wavelength, such as of 300-800 nm, preferably at 540 nm.

The delayed luminescence is performed by providing radiation to a polymer element with at least one wavelength of 180-1000 nm, preferably 200-800 nm, such as at 540 nm, and the delayed luminescence is detected with at least one wavelength of 180-1000 nm, preferably 200-800 nm, such as by using per colour at least one different radiation/detection wavelength.

In an exemplary embodiment of the present method identifying a delayed luminescence response comprises comparison with at least one calibration curve of a type of polymer and colour thereof, preferably an intensity normalized comparison thereof, and/or photo multiplying the delayed luminescence response.

In an exemplary embodiment of the present method the polymer is a thermo-hardened polymer, preferably selected poly propylene (PP), poly ethylene (PE), polyvinyl chloride (PVC), acryl butyl styrene (ABS), poly styrene (PS), poly carbonate (PC), high-density poly ethylene (HDPE), poly oxy methylene (POM), and poly methyl methacrylate (PMMA).

In an exemplary embodiment of the present method a non-identified polymer element is re-identified.

In an exemplary embodiment of the present method a size of the polymer material is reduced to < 10 cm diameter.

In an exemplary embodiment of the present method colour separating the polymer material comprises identifying at least one UV-vis emission of at least one individual polymer element, typically in a wavelength range of 200-800 nm, such as 300-600 nm. An example of a suitable UV-vis spectrometer is Ocean Insight STS-Vis Miniature Spectrometer.

In an exemplary embodiment of the present method colour separating the polymer material further comprises identifying at least one Raman or Near infra-red emission of at least one individual polymer element. The NIR emission is typically obtained typically in a wavelength range of 800-2000 nm, such as 1000-1500 nm. An example of a suitable NIR spectrometer is Ocean Insight FLAMENIR Miniature Spectrometer.

In an exemplary embodiment of the present method the delayed luminescence is performed by using a wavelength variable light source.

In an exemplary embodiment of the present method the delayed luminescence is performed by using an analytical multiple linear regression technique, and/or by using at least two analytical multiple linear regression technique steps, such as 3-10 steps, and/or by using a prediction model.

In an exemplary embodiment of the present method the delayed luminescence is performed during a time period of 0.1-10 seconds per polymer element.

In an exemplary embodiment of the present method colour separation is performed in parallel for a plurality of polymer elements.

In an exemplary embodiment of the present method sorting is performed in parallel for a plurality of polymer elements.

In an exemplary embodiment of the present method colour fraction forming comprises air-assisted separating and/or light-assisted separating, such as laser assisted separating.

In an exemplary embodiment of the present method individual polymer elements are recognized, such as by optical recognition, preferably by 3D-recognition, optionally wherein recognized polymer elements are provided with a unique tag.

In an exemplary embodiment of the present method sorted polymer elements are re-used.

In an exemplary embodiment the present apparatus is adapted to separate individual elements in a plurality of elements, in particular largely the same elements, wherein the plurality of elements comprises homogeneous inorganic materials, in particular metals, brick, textile, stone, and homogeneous inorganic materials comprising products, or combinations thereof.

The invention will hereafter be further elucidated through the following examples which are exemplary and explanatory of nature and are not intended to be considered limiting of the invention as defined by the appended claims.

To the person skilled in the art it may be clear that many variants, being obvious or not, may be conceivable falling within the scope of protection, defined by the present claims.

### SUMMARY OF THE FIGURES

Figure 1 shows schematics of the prior art.
Figure 2 shows schematics of the present delayed luminescence measurement.
Figure 3 shows schematics of the present apparatus.
Figure 4 shows schematics of the present method and apparatus.
Figure 5 shows schematics of an example of the present apparatus.

### DETAILED DESCRIPTION OF FIGURES

The figures have been detailed throughout the description.

### EXAMPLES

### DL procedure as used for discriminating the polymer types

The measurement device includes a dark sample chamber with a vertically positioned photomultiplier tube (PMT). The sample chamber was kept at room temperature. The cathode opening of the PMT has a diameter of 44mm. The PMT is cooled to 25 ° C to reduce the dark count rate to 10 counts per second.

Plastic samples with an average size of 2-4 cm were placed in the dark chamber. For excitation of the plastics a UV source (275 nm UV LED) was used at a 10 cm distance from the object using a power of 1 W.

### Excitation time = 10 sec

Measurement time is 40 sec over consecutive periods of 0.2 sec resulting in 200 data points.

Results were satisfactory, typically independent of age (old/new) of the polymer pieces. Without a dedicated computer analysis could be performed in less than a few seconds, typically in less than a second. In a further example polymers were shredded into piece in a size range of <5 mm diameter, showing similar results. Non-identified pieces of polymer were fed back into the system/apparatus used. Typically such a feedback loop reduces the percentage of non-identified pieces by at least a factor, such as to 20-30% of the initially non-identified pieces.

Mixed pieces of various colours of four main types of polymers were analysed on reproducibility. The types of polymers were PE, PP, PVC and ABS. Typically thermoset polymers were used. Colours tested were yellow, red, blue and white. ABS and PE could typically be determined without much effort, typically >90% was correctly determined. Yellow was most easy.

## Claims

1. Method of separating various types of polymers, comprising
providing an amount of mixed polymer material,
reducing a size of the polymer material,
colour separating the polymer material therewith forming colour sorted fractions, each colour separated fraction comprising a plurality of polymer elements,
feeding a colour sorted fraction to an enclosed space, preferably a space which limits entry of radiation in a wave-length range of 180-3000 nm to less than 10⁻³ W/m², preferably to less than 10⁻⁵ W/m²,
identifying a delayed luminescence response of at least one individual polymer element in said enclosed space, wherein the delayed luminescence is performed by providing radiation to a polymer element with at least one wavelength of 180-1000 nm, wherein the delayed luminescence is detected with at least one wavelength of 180-1000 nm, and
sorting polymer elements per type of polymer.

2. Method according to claim 1, wherein the delayed luminescence is performed by providing radiation to a polymer element with at least one wavelength of 200-800 nm, such as at 540 nm, and/or
wherein the delayed luminescence is detected with at least one wavelength of 200-800 nm.

3. Method according to any of claims 1-2, wherein identifying a delayed luminescence response comprises comparison with at least one calibration curve of a type of polymer and colour thereof, preferably an intensity normalized comparison thereof, and/or photo multiplying the delayed luminescence response.

4. Method according to any of claims 1-3, wherein the polymer is a thermo-hardened polymer or thermoplastic polymer, preferably selected from poly propylene (PP), poly ethylene (PE), polyvinyl chloride (PVC), acryl butyl styrene (ABS), poly styrene (PS), poly carbonate (PC), high-density poly ethylene (HDPE), poly oxy methylene (POM), and poly methyl methacrylate (PMMA).

5. Method according to any of claims 1-4, wherein a non-identified polymer element is re-identified.

6. Method according to any of claims 1-5, wherein a size of the polymer material is reduced to < 10 cm largest cross-sectional diameter.

7. Method according to any of claims 1-6, wherein colour separating the polymer material comprises identifying at least one UV-vis emission and/or UV-vis reflection of at least one individual polymer element, and/or wherein colour separating the polymer material comprises separating polymer elements into at least four non-overlapping bins, preferably 5-12 bins, wherein each bin preferably comprises polymers of a central wavelength ±40nm, more preferably of a central wavelength ±30nm, even more preferably of a central wavelength ±20nm, such as ±10nm.

8. Method according to claim 7, wherein colour separating the polymer material further comprises identifying at least one Raman or Near infra-red emission of at least one individual polymer element.

9. Method according to any of claims 1-8, wherein the delayed luminescence is performed by using a wavelength variable light source.

10. Method according to any of claims 1-9, wherein the delayed luminescence is performed by using an analytical multiple linear regression technique, and/or by using at least two analytical multiple linear regression technique steps, such as 3-10 steps, and/or by using a prediction model.

11. Method according to any of claims 1-10, wherein the delayed luminescence is performed during a time period of 0.1-10 seconds per polymer element.

12. Method according to any of claims 1-11, wherein colour separation is performed in parallel for a plurality of polymer elements, and/or wherein sorting is performed in parallel for a plurality of polymer elements.

13. Method according to any of claims 1-12, wherein colour fraction forming comprises air-assisted separating and/or light-assisted separating, such as laser assisted separating.

14. Method according to any of claims 1-13, wherein individual polymer elements are recognized, such as by optical recognition, preferably by 3D-recognition, optionally wherein recognized polymer elements are provided with a unique tag, in particular wherein sorted polymer elements are re-used.

15. Apparatus for separating various types of polymers, comprising
at least one feeder for providing unseparated polymers,
at least one transporter for moving polymer elements,
at least one colour identifier for colour separating the polymer material therewith forming colour sorted fractions, each colour separated fraction comprising a plurality of polymer elements,
at least one enclosed space for receiving polymer elements, comprising at least one polymer identifier, and at least one delayed luminescence sensor, optionally comprising a photomultiplier,
at least one separator for separating polymer elements, and
a computer program comprising instructions loaded on at least one computer for carrying out the following steps:
identifying a delayed luminescence response of an individual polymer element, and
based on said response optionally sorting elements of polymer per type of polymer, in particular
adapted to separate individual elements in a plurality of elements, in particular largely the same elements, wherein the plurality of elements comprises homogeneous inorganic materials, in particular metals, brick, textile, stone, and comprising homogeneous inorganic materials products, or combinations thereof.

## Patentansprüche

1. Verfahren zum Trennen verschiedener Arten von Polymeren, umfassend
- das Bereitstellen einer Menge an gemischtem Polymermaterial,
- Zerkleinern einer Größe des Polymermaterials
- Farbtrennung des Polymermaterials unter Bildung farblich sortierter Fraktionen, wobei jede farbgetrennte Fraktion eine Vielzahl von Polymerelementen umfasst,
- Zuführen einer farblich sortierten Fraktion in einen geschlossenen Raum, vorzugsweise einen Raum den Eintritt von Strahlung in einem Wellenlängenbereich von 180-3000 nm auf weniger als 10-3 W/m2, vorzugsweise auf weniger als 10-5 W/m2, begrenzt
- Identifizieren einer verzögerten Lumineszenzreaktion von mindestens einem einzelnen Polymerelement in dem geschlossenen Raum, wobei die verzögerte Lumineszenz durch Bereitstellen von Strahlung für ein Polymerelement mit mindestens einer Wellenlänge von 180-1000 nm durchgeführt wird, wobei die verzögerte Lumineszenz mit mindestens einer Wellenlänge von 180-1000 nm erfasst wird, und
- Sortieren der Polymerelemente nach Polymertyp.

2. Verfahren nach Anspruch 1, wobei die verzögerte Lumineszenz durch Bestrahlung eines Polymerelements mit mindestens einer Wellenlänge von 200-800 nm, beispielsweise bei 540 nm, durchgeführt wird und/oder
wobei die verzögerte Lumineszenz mit mindestens einer Wellenlänge von 200-800 nm detektiert wird.

3. Verfahren nach einem der Ansprüche 1 bis 2, wobei die Identifizierung einer verzögerten Lumineszenzantwort den Vergleich mit mindestens einer Kalibrierungskurve eines Polymertyps und dessen Farbe, vorzugsweise einen intensitätsnormierten Vergleich, und/oder die Photo Multiplikation der verzögerten Lumineszenzreaktion.

4. Verfahren nach einem der Ansprüche 1 bis 3, wobei das Polymer ein thermisch gehärtetes Polymer oder ein thermoplastisches Polymer ist, vorzugsweise ausgewählt aus Polypropylen (PP), Polyethylen (PE), Polyvinylchlorid (PVC), Acrylbutylstyrol (ABS), Polystyrol (PS), Polycarbonat (PC), Polyethylen hoher Dichte (HDPE), Poly oxy methylen (POM) und Poly Methyl methacrylat (PMMA).

5. Verfahren nach einem der Ansprüche 1-4, wobei ein nicht identifiziertes Polymerelement erneut identifiziert wird.

6. Verfahren nach einem der Ansprüche 1 bis 5, wobei die Größe des Polymermaterials auf < 10 cm größten Querschnittsdurchmesser reduziert wird.

7. Verfahren nach einem der Ansprüche 1 bis 6, wobei die Farbtrennung des Polymermaterials das Identifizieren mindestens einer UV-Vis-Emission und/oder UV-Vis-Reflexion mindestens eines einzelnen Polymerelements umfasst, und/oder wobei die Farbtrennung des Polymermaterials das Trennen von Polymerelementen in mindestens vier nicht überlappende Bins, vorzugsweise 5 bis 12 Bins, umfasst, wobei jedes Bin vorzugsweise Polymere mit einer zentralen Wellenlänge von +40 nm, noch bevorzugter mit einer zentralen Wellenlänge von ±30 nm, noch bevorzugter mit einer zentralen Wellenlänge von ±20 nm, wie ±10 nm, umfasst.

8. Verfahren nach Anspruch 7, wobei die Farbtrennung des Polymermaterials ferner die Identifizierung mindestens einer Raman- oder Nahinfrarot-Emission von mindestens einem einzelnen Polymerelement umfasst.

9. Verfahren nach einem der Ansprüche 1-8, wobei die verzögerte Lumineszenz unter Verwendung einer wellenlängenvariablen Lichtquelle durchgeführt wird.

10. Verfahren nach einem der Ansprüche 1 bis 9, wobei die verzögerte Lumineszenz unter Verwendung einer analytischen multiplen linearen Regressionstechnik und/oder unter Verwendung von mindestens zwei analytischen multiplen linearen Regressionstechnikschritten, wie 3 bis 10 Schritten, und/oder unter Verwendung eines Vorhersagemodells durchgeführt wird.

11. Verfahren nach einem der Ansprüche 1-10, wobei die verzögerte Lumineszenz während einer Zeitspanne von 0,1-10 Sekunden pro Polymerelement durchgeführt wird.

12. Verfahren nach einem der Ansprüche 1-11, wobei die Farbtrennung parallel für mehrere Farbseparation parallel für eine Vielzahl von Polymerelementen durchgeführt wird, und/oder wobei die Sortierung parallel für eine Vielzahl von Polymerelementen durchgeführt wird.

13. Verfahren nach einem der Ansprüche 1-12, wobei die Farbfraktionsbildung umfasst luftunterstütztes Trennen und/oder lichtunterstütztes Trennen, wie beispielsweise laserunterstütztes Trennen, umfasst.

14. Verfahren nach einem der Ansprüche 1 bis 13, wobei einzelne Polymerelemente erkannt werden, beispielsweise durch optische Erkennung, vorzugsweise durch 3D-Erkennung, wobei erkannte Polymerelemente optional mit einer eindeutigen Markierung versehen werden, insbesondere wobei sortierte Polymerelemente wiederverwendet werden.

15. Vorrichtung zum Trennen verschiedener Polymertypen, umfassend
- mindestens eine Zuführung zur Bereitstellung ungetrennter Polymere,
- mindestens einen Transporter zum Bewegen von Polymerelementen,
- mindestens einen Farbidentifizierer zur Farbtrennung des Polymermaterials mit die Bildung farblich sortierter Fraktionen, wobei jede farbgetrennte Fraktion eine Vielzahl von Polymerelementen umfasst,
- mindestens einen geschlossenen Raum zur Aufnahme von Polymerelementen, der mindestens einen Polymeridentifikator und mindestens einen Sensor für verzögerte Lumineszenz umfasst, der gegebenenfalls einen Photomultiplier umfasst,
- mindestens einen Separator zum Trennen von Polymerelementen, und
- ein Computerprogramm, das Anweisungen enthält, die auf mindestens einem Computer geladen sind, um die folgenden Schritte auszuführen:
Identifizieren einer verzögerten Lumineszenzantwort eines einzelnen Polymerelements und basierend auf dieser Antwort optionales Sortieren von Polymerelementen pro Polymertyp, insbesondere geeignet zum Trennen einzelner Elemente in einer Vielzahl von Elementen, insbesondere weitgehend gleichen Elementen, wobei die Vielzahl von Elementen homogene anorganische Materialien, insbesondere Metalle, Ziegel, Textilien, Stein, und homogene anorganische Materialprodukte umfasst, oder Kombinationen davon.

## Revendications

1. Méthode de séparation de divers types de polymères, comprenant
- la fourniture d'une quantité de matériau polymère mélangé,
- réduire la taille du matériau polymère
- séparer par couleur le matériau polymère pour former des fractions triées par couleur, chaque fraction séparée par couleur comprenant une pluralité d'éléments polymères.
- fraction triée par couleur, chaque fraction séparée par couleur comprenant une pluralité d'éléments polymères,
- introduire une fraction triée par couleur dans un espace clos, de préférence un espace qui limite l'entrée du rayonnement dans une gamme d'ondes.
l'entrée d'un rayonnement dans une gamme de longueurs d'onde de 180-3000 nm à moins de 10-3 W/m2, de préférence à moins de 10-5 W/m2,
- identifier une réponse de luminescence retardée d'au moins un élément polymère individuel dans ledit espace clos, la luminescence retardée étant réalisée en fournissant un rayonnement à un élément polymère avec au moins une longueur d'onde de 180-1000 nm, la luminescence retardée étant détectée avec au moins une longueur d'onde de 180-1000 nm,
- et trier les éléments polymères par type de polymère.

2. Méthode selon la revendication 1, dans laquelle la luminescence retardée est réalisée en irradiant un élément polymère avec au moins une longueur d'onde de 200-800 nm, par exemple à 540 nm, et/ou
dans laquelle la luminescence retardée est détectée avec au moins une longueur d'onde de 200-800 nm.

3. Méthode selon l'une des revendications 1-2, dans laquelle l'identification d'une réponse de luminescence retardée comprend la comparaison avec au moins une courbe d'étalonnage d'un type de polymère et de sa couleur, de préférence une comparaison normalisée en fonction de l'intensité, et/ou la photo multipliant la réponse de luminescence retardée.

4. Méthode selon l'une des revendications 1 à 3, dans laquelle le polymère est un polymère thermodurci ou un polymère thermoplastique, de préférence choisi parmi le polypropylène (PP), le polyéthylène (PE), le chlorure de polyvinyle (PVC), l'acryl butyl styrène (ABS), le poly styrène (PS), le poly carbonate (PC), le polyéthylène haute densité (HDPE), le poly oxy méthylène (POM) et le poly méthacrylate de méthyle (PMMA).

5. Méthode selon l'une des revendications 1 à 4, dans laquelle un élément polymère non identifié est réidentifié.

6. Méthode selon l'une des revendications 1 à 5, dans laquelle la taille du matérial polymère est réduite à < 10 cm pour le plus grand diamètre de la section transversale.

7. Méthode selon l'une des revendications 1 à 6, dans laquelle la séparation des couleurs du matériau polymère consiste à identifier au moins une émission UV-vis et/ou une réflexion UV-vis d'au moins un élément polymère individuel, et/ou dans laquelle la séparation des couleurs du matériau polymère consiste à séparer les éléments polymères en au moins quatre bacs ne se chevauchant pas, de préférence 5 à 12 bacs, chaque bac comprenant de préférence des polymères d'une longueur d'onde centrale de +40nm, de préférence d'une longueur d'onde centrale de ±30nm, de préférence encore d'une longueur d'onde centrale de ±20nm, telle que ±10nm.

8. Méthode selon la revendication 7, dans laquelle la séparation des couleurs du matériau polymère comprend en outre l'identification d'au moins une émission Raman ou proche infrarouge d'au moins un élément polymère individuel. élément polymère individuel.

9. Méthode selon l'une des revendications 1 à 8, dans laquelle la luminescence retardée est réalisée à l'aide d'une source lumineuse à longueur d'onde variable.

10. Méthode selon l'une des revendications 1 à 9, dans laquelle la luminescence retardée est réalisée en utilisant une technique de régression linéaire multiple analytique, et/ou en utilisant au moins deux étapes de la technique de régression linéaire multiple analytique, telles que 3 à 10 étapes, et/ou en utilisant un modèle de prédiction.

11. Méthode selon l'une des revendications 1 à 10, dans laquelle la luminescence retardée est réalisée pendant une période de temps de 0,1 à 10 secondes par élément polymère.

12. Méthode selon l'une des revendications 1 à 11, dans laquelle la séparation des couleurs est effectuée en parallèle pour une pluralité d'éléments polymères, et/ou dans laquelle le tri est effectué en parallèle pour une pluralité d'éléments polymères.

13. Méthode selon l'une des revendications 1 à 12, dans laquelle la formation de fractions colorées comprend une séparation assistée par air et/ou une séparation assistée par lumière, telle qu'une séparation assistée par laser.

14. Méthode selon l'une des revendications 1 à 13, dans laquelle les éléments polymères individuels sont reconnus, par exemple par reconnaissance optique, de préférence par reconnaissance 3D, éventuellement dans laquelle les éléments polymères reconnus sont munis d'une étiquette unique, en particulier dans laquelle les éléments polymères triés sont réutilisés.

15. Appareil pour la séparation de divers types de polymères, comprenant
- au moins un alimentateur pour fournir des polymères non séparés,
- au moins un transporteur pour déplacer les éléments polymères
- au moins un identificateur de couleur pour la séparation par couleur des matériaux polymères avec celui-ci former des fractions triées par couleur, chaque fraction séparée par couleur comprenant une pluralité d'éléments polymères,
- au moins un espace clos pour recevoir les éléments polymères, comprenant au moins un identificateur de polymère au moins un identificateur de polymère, et au moins un capteur de luminescence retardée, comprenant éventuellement un photomultiplicateur,
- au moins un séparateur pour séparer les éléments polymères, et
- un programme informatique comprenant des instructions chargées sur au moins un ordinateur pour effectuer les étapes suivantes :
identifier une réponse de luminescence retardée d'un élément de polymère individuel, et sur la base de cette réponse, éventuellement trier des éléments de polymère par type de polymère, en particulier adapté pour séparer des éléments individuels dans une pluralité d'éléments, en particulier en grande partie les mêmes éléments, dans laquelle la pluralité d'éléments comprend des matériaux inorganiques homogènes, en particulier des métaux, des briques, des textiles, des pierres, et comprenant des produits de matériaux inorganiques homogènes, ou des combinaisons de ceux-ci.
